# EUROPEAN PATENT SPECIFICATION

(11) **EP 1 873 575 B1**
(45) Date of publication and mention of the grant of the patent: **05.11.2008**
(21) Application number: 06300736.3
(22) Date of filing: 30.06.2006
(51) Int. Cl.: G02F 1/01, H04B 10/155

(54) **Optical modulation apparatus and method to control it**
Optische Modulationsvorrichtung und Verfahren zu deren Steuerung
Appareil de modulation optique et méthode de control de l'appareil

(43) Date of publication of application: 02.01.2008
(73) Proprietor: Alcatel Lucent, 75008 Paris (FR)
(72) Inventor: Brindel, Patrick, 91310, Longpont S/Orge (FR); Pierre, Laurent, 91400, Orsay (FR); Tanguy, Jean-Marc, 92140, Clamart (FR); Hugbart, Alain, 91230, Montgeron (FR)
(74) Representative: Korakis-Ménager, Sophie

(56) References cited:
- WO-A-20/04072714
- US-A1- 2001 007 508
- US-A1- 2005 135 816

## Description

### Background of the Invention

This invention relates to an optical modulation apparatus and to a method of controlling an optical modulator. More particularly, the invention relates to an optical modulation apparatus and to a method of controlling an optical modulator, wherein even if the operating point of an optical modulator the optical output of which varies periodically with respect to a driving voltage fluctuates owing to a change in ambient temperature or aging, the fluctuation in operating point can be compensated for in stable fashion.
More specifically, the present invention relates to a control method for stabilizing the operating point of a Mach-Zehnder optical modulator (referred to as an "MZ-type optical modulator) in an optical transmitter used in a time-division multiplexing (TDM) or wavelength-division multiplexing (WDM) optical transmission system.
The explosive increase in the quantity of available information in recent years has made it desirable to enlarge the capacity and lengthen the distance of optical communications systems. In-line optical amplifier systems, which accommodate a transmission speed of 10 Gbit/s now being put to practical use. Even greater capacity will be required in the future, and research and development is proceeding in both the TDM and WDM aspects of optical transmission.

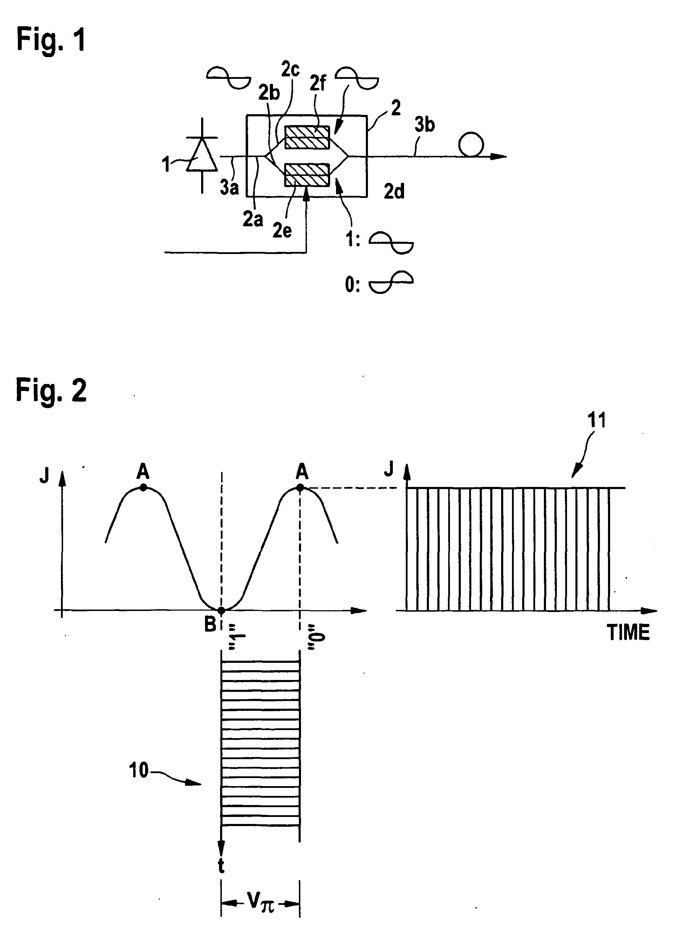

To avoid chirping problems external modulation is used for high transmission speeds of 2.5 to 10 Gbps. According to external modulation, a laser diode emits light continuously and the emitted light is turned on and off by the "1"s and "0"s of data using an external modulator. The above-mentioned MZ-type modulator primarily is used as the external modulator , see Fig. 1.
A distributed feedback semiconductor laser diode 1 used in long-distance transmission at a speed of greater than 1 Gbps is followed by a MZ-type modulator 2 and optical fibers 3. The MZ-type modulator 2 includes on an LiNb03 substrate, an input optical waveguide 2a formed on the substrate for introducing light from the laser diode 1, branching optical waveguides 2b, 2c and an output optical waveguide 2d formed on the substrate for outputting modulated light; two signal electrodes 2e, 2f formed on the substrate for applying phase modulation to the optical signals in the branching optical waveguides 2b, 2c, and a signal input terminal 2g formed on the substrate for inputting an NRZ electrical drive signal to one of the signal electrodes, or on both.
If a voltage applied to the signal electrodes 2e, 2f is controlled by the "1"s and "0"s of data, the branching optical waveguides 2b, 2c develop a difference in refractive index and the light waves of the optical signals in the optical waveguides develop a difference in phase between them. For example, if the data is a "0", control is performed in such a manner that the phase difference between the light waves of the optical signals in the two optical waveguides 2b, 2c becomes 180[deg.]; if the data is a "1", control is performed in such a manner that the phase difference between the light waves of the optical signals in the two optical waveguides 2b, 2c becomes 0[deg.]. If this arrangement is adopted, superimposing the optical signals of the two optical waveguides 2b, 2c will make it possible to output the input light upon modulating it (turning it on and off) by the "1" s and "0"s of the data.
As shown in FIG. 2, the optical output characteristic of the MZ-type optical modulator, which has a voltage difference between the two electrodes thereof, varies periodically in dependence upon the applied voltage. Point A represents the culmination of the light emission and point B the culmination of extinction. The range of the voltage over one period is 2V[pi]. When data is a "1", therefore, voltage having an amplitude of V[pi] is applied between the signal electrodes 2e, 2f, whereby light is emitted. When data is a "0", a voltage of zero is applied between the signal electrodes 2e, 2f, whereby light is extinguished.
The MZ-type optical modulator described above is advantageous in that transmitted light exhibits little chirping. However, a change in the temperature of the LiNb03 constituting the substrate, prolonged application of an electric field thereto and aging thereof are accompanied by polarization of the substrate per se, electric charge remains on the surface of the substrate and the bias voltage across the signal electrodes fluctuates. Consequently, the voltage-optical output characteristic of the MZ-type optical modulator fluctuates to the left and right from the ideal curve of Fig. 2. In other words, the operating point of the MZ-type optical modulator drifts with the passage of time, thereby the on/off light level changes and causes inter symbol interference between codes .

Accordingly, in order to stabilize the operating point, the conventional practice is to perform control in such a manner that the bias voltage is increased correspondingly if the curve shifts to the right and decreased correspondingly if the curve shifts to the left. More specifically, there has been proposed a compensation method, which includes superimposing a low-frequency signal on an electrical drive signal, detecting the amount of drift of the operating point and the direction of this drift, and controlling the bias voltage by feedback as it is disclosed in US 6362913.

Dithering voltage applied on the DC bias voltage is already implemented for testing in laboratory equipment. Through experimental test of solution of dithering voltage, it appears that the optimum bias point is not well defined and often different from the manually obtained best operating point. Parameters as eye diagram shape, limitation of the amplitude swing voltage amplitude swing voltage being very difficult to obtain at 43Gbit/s when using single drive X-cut MZ /or managing the dual drive driver output is difficult to do.
Alcatel proposed solution, unfortunately required high frequency components (photodiode associated to a clock frequency filter) representing a too high cost peculiarly at 43GHz.

### Summary of the Invention

The so-called Phase Shifted Binary Transmission (PSBT) based on a combination of amplitude and phase modulation doubles tolerance to chromatic dispersion and halves the spectrum width of individual channels.

In order to realize such modulation fast circuitries are need encoding a binary signal. A phase modulation or phase shift keying is a modulation where frequency and amplitude are both kept constant. However, the phase of the signal is shifted to signify logic 0 and 1.

The invention provides an optical modulation apparatus according to claim 1 and a method according to claim 5. The subclaims define particular embodiments.

### Short Description of the Invention

Fig 1 : shows a Mach Zehnder Modulator as known in prior art
Fig. 2 : shows the resulting function the Mach Zehnder Modulator
Fig. 3: shows a first embodiment of the invention
Fig. 4 shows a second embodiment of the invention

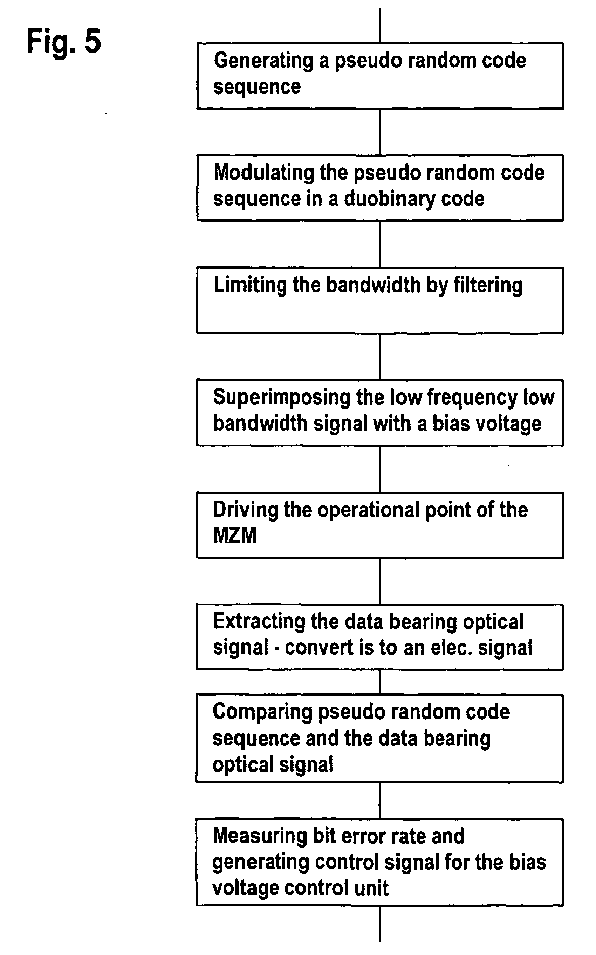

Fig. 5: explain the method of the invention

The invention apparatus uses a Pseudorandom Binary Sequence or a supervision code sequence module and a duo binary modulation of this sequence as a reference signal.
The code sequence is using low frequencies, normally not more than 3 kHz to avoid problems in the feed back loop when the apparatus is used for 43 Gbps. The low frequency signals is not a sinus type signal but a "quasi" data signal, a bit sequence to train the apparatus to adapt. But it is possible to use a low frequency PRBS or
supervision data signal without large degradation of the 43Gbit/s signal having up to 400/500KHz. bandwidth corresponding to 1.6/2Mbit/s initial low frequency signal. The optimum is 100KHz as typical low cut-off frequency of 43Gbit/s driver.

Duobinary modulation has a long history in electrical communications, where it is known to give a factor of two better spectral efficiency compared to NRZ, as well as being more tolerant of Inter Symbol Interference. An optical duobinary transmitter can be realized with a single MZM .The electrical NRZ drive signal is first amplified up to MachZehnder modulator. It is then passed through an RF low-pass-filter (LPF) with bandwidth equal to roughly a quarter of the bitrate. Such a LPF is equivalent to a bit-period delay and add operation, thus producing a three-level electrical duobinary signal with logical levels {+1, 0, -1}. The MZM is biased at a null, so that electrical logical +/-1 is converted to optical +/- E, where E is the optical field amplitude, and electrical logical 0 is converted to optical logical 0.
The optical duobinary levels +/- E both correspond to logical 1. The phase of these 1 bits is modulated between 0 and π according to the electrical duobinary drive signal, while actually no useful information is encoded in this phase modulation. By modulating the phase of the one bits in a specific way, duobinary modulation produces a narrower spectrum compared to NRZ. ISI distortion is also reduced since bit patterns such as 101 are transmitted with the ones carrying an opposite phase (i.e. the corresponding optical field amplitude is {- E 0 E}). Thus, if the pulses corresponding to the one bits spread out into the zero time-slot in between (for example due to fiber dispersion), they tend to cancel each other out. A particularly useful feature of duobinary modulation is that a conventional intensity photodetector can be used for the duobinary receiver (provided the data source is differentially encoded to avoid error propagation). Comparing the spectra, RZ modulation has the broadest spectrum, about a factor of two wider than NRZ. In contrast, duobinary shows the narrowest spectrum, implying a high spectral efficiency, i.e. the tightest packing of WDM channels on a single optical fiber.

The invention takes advantage of the behavior of the duobinary signal to have a feed back function for the optical modulation apparatus stable and reliable without using expensive components and without needing a lot of resources.

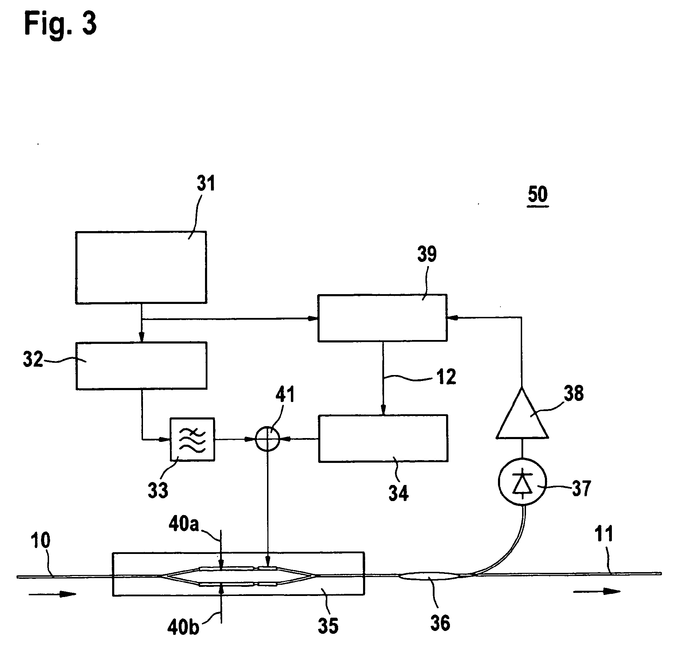

An example of the invention is described in figure 3. The optical modulation apparatus 50 has a couple of components :

As a conventional apparatus the optical input 10 is connected to a Mach-Zehnder Modulator 35, whose output 11 is connected via a coupler 36 to the optical line.

The Mach-Zehnder modulator is a LiNb03 crystal either using a single drive X-cut or a dual drive modulator, wherein two electrodes superpose the waveguides in the crystal.. The data signal to modulate the MZM 35 is applied by the connection 40 a and 40 b in the described embodiment.
The optical coupler 36 taps 2 to 10 % of the output signals power to a detector 37 and an amplifier 38.

A code sequence generator 31 is connected with a duobinary pre-coding unit 32 and a filter 33. The code sequence generator 31 is connected with a controller 39 too.

The controller has an additional link to the detector, amplifier unit 37,38 and an output linked to a bias voltage supply unit 34. Via a superimposing unit 41 linked to the filter 33 an the bias voltage supply unit 34 , a supplementary electrode in the MZM 35 is connected

The code sequence generator 31 generates a pseudo random code sequence, meaning that the bit stream is random in a sense that the value of any element is independent from the values of other elements. This electrical signals is applied to the duobinary pre-coding unit 32, generating a duobinary signal as described above. The bandwidth of the code sequence is limited passing a filter. A Bessel type filter is of advantage, the order of the Bessel function selected according the edge of the cut of frequency. A good example is the use of fifth order Bessel filter. This filter cuts off a quarter of the incoming data bit rate. If the code sequence generator produces a 2 Mbps signal the necessary bandwidth is limited to only 500 kHz.

The filtered code sequence is superposed to the bias voltage which drives the operational point of the MZM 35.
After the transfer of the electrical signals, the signal serves to drive the operational point and the data signals into the optical region. A part of the optical output signal is tapped. The detector, a normal photodiode, detects the signal and transfers it back into the electrical region. This electrical signal comprising the data signal and the code sequence is fed into the controller 39 together with the original code sequence from the code sequence generator 31. The controller 39 compares the signals and analyzes the bit errors that occur. The controller runs the function to find a minimum in the BER as measured.

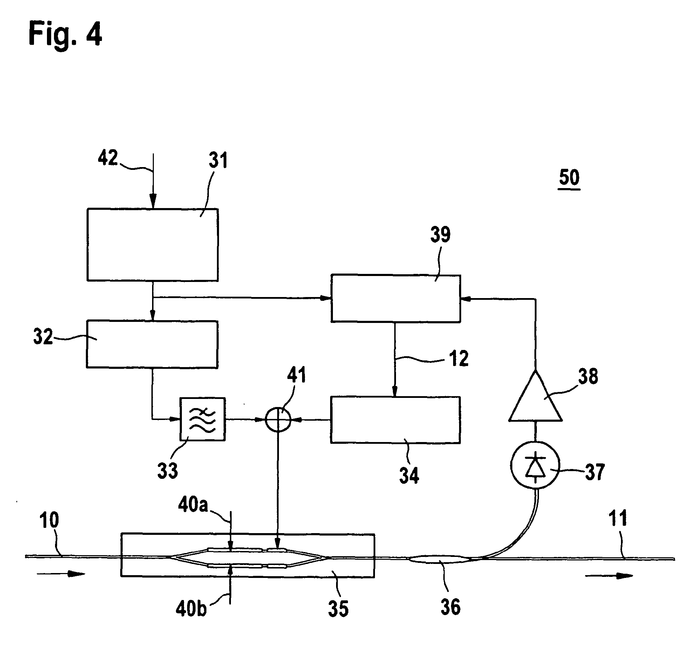

In another embodiment is shown in Fig. 4 the code sequence is not generated in a code sequence generator but fed in via a supervisory channel 42. The supervisory code sequence can be transmitted from a remote transmitter and can be reused at repeater nodes of the transmission system.

## Claims

1. An optical modulation apparatus including an optical modulator (35) having a voltage-optical output characteristics in which the optical output (11) varies periodically with respect to a voltage value of an electrical drive signal, said apparatus comprising: a code sequence generator (31) adapted to output a pseudo random low-frequency signal; followed by a duobinary precoding unit (32) followed by a filter (33) adapted to provide a low bit rate, low bandwidth duobinary signal, a superimposing unit (41) adapted to superimpose the low bit rate, low bandwidth duobinary signal on the drive signal; a low-frequency signal detection unit (37) and a controller (39) adapted to detect an operating-point drift of the optical modulator; and a bias control supply unit (34) adapted to control the operating point of the optical modulator (35) by supplying a bias component, of the electrical drive signal as a function of the detected operating-point drift.

2. An optical modulation apparatus according to claim 1, wherein the controller is adapted to measure a bit error rate by comparing the pseudo random low-frequency signal output by the code sequence generator (31) with the data bearing superimposed signal detected by the low-frequency signal detection unit (37).

3. An optical modulation apparatus according to claim 1, wherein the pseudo random low-frequency signal is a supervisor signal fed into the code sequence generator (31).

4. An optical modulation apparatus according to claim 1, wherein the pseudo random low-frequency signal is generated by the code sequence generator.

5. An optical modulation apparatus according to claim 1 wherein the filter (33) is adapted to cut off around a quarter of the applied bit rate.

6. A method to run an optical modulator apparatus by driving a Mach Zehnder Modulator (35) with data signals and an operational point stabilizing signal, using a bias control supply unit (34), comprising the steps of
- generating a pseudo random low-frequency signal using a code sequence generator (31), coding the low-frequency signal as a duobinary signal and filtering the signal to limit its bandwidth to generate a low bit rate, low bandwidth duobinary signal;
- superimposing said low bit rate, low bandwidth duobinary signal with the drive signal of the Mach Zehnder Modulator,
- detecting an operating-point drift of the Mach Zehnder Modulator by comparing the pseudo random low-frequency signal generated by the code sequence generator (31) with an output of the Mach Zehnder modulator (35) detected by a low-frequency signal detection unit (37); and
- controlling the operating point of the Mach Zehnder Modulator as a function of the detected operating-point drift of the Mach Zehnder Modulator.

## Patentansprüche

1. Eine optische Modulationsvorrichtung einschließlich eines optischen Modulators (35) mit einer spannungsoptischen Ausgangseigenschaft, in welcher die optische Ausgabe (11) periodisch entsprechend einem Spannungswert eines elektrischen Antriebssignal variiert, wobei die Vorrichtung umfasst: Einen Codefolgengenerator (31), welcher dafür ausgelegt ist, ein pseudozufälliges Niederfrequenzsignal auszugeben; gefolgt von einer duobinären Vorcodierungseinheit (32), gefolgt von einem Filter (33), welcher fähig ist, ein duobinäres Signal mit niedriger Bitrate und niedriger Bandbreite zu liefern, eine Überlagerungseinheit (41), welche fähig ist, das duobinäre Signal mit niedriger Bitrate und niedriger Bandbreite auf dem Antriebssignal zu überlagern; eine Niederfrequenzsignal-Erkennungseinheit (37) und ein Controller (39), welcher dafür ausgelegt ist, eine Arbeitspunktverschiebung des optischen Modulators zu erkennen; und eine Versorgungseinheit für die Vorspannungsregelung (34), welche fähig ist, den Arbeitspunkt des optischen Modulators (35) durch Bereitstellung einer Bias-Komponente des elektrischen Antriebssignals als eine Funktion der erkannten Arbeitspunktverschiebung zu regeln.

2. Eine optische Modulationsvorrichtung nach Anspruch 1, wobei der Controller fähig ist, eine Bitfehlerrate durch Vergleichen des von dem Codefolgengenerator (31) ausgegebenen pseudozufälligen Niederfrequenzsignals mit dem von der Niederfrequenzsignal-Erkennungseinheit (37) erkannten überlagerten datentragenden Signal zu messen.

3. Eine optische Modulationsvorrichtung nach Anspruch 1, wobei das pseudozufällige Niederfrequenzsignal ein in den Codefolgengenerator (31) eingespeistes Überwachungssignal ist.

4. Eine optische Modulationsvorrichtung nach Anspruch 1, wobei das pseudozufällige Niederfrequenzsignal von dem Codefolgengenerator erzeugt wird.

5. Eine optische Modulationsvorrichtung nach Anspruch 1, wobei der Filter (33) fähig ist, ungefähr ein Viertel der angewandten Bitrate abzutrennen.

6. Ein Verfahren für den Betrieb einer optischen Modulationsvorrichtung durch Steuern eines Mach- Zehnder-Modulators (35) mit Datensignalen und einem Arbeitspunktstabilisierungssignal, unter Verwendung einer Versorgungseinheit für die Vorspannungsregelung (34), welches folgende Schritte umfasst:
- Erzeugen eines pseudozufälligen Niederfrequenzsignals unter Verwendung eines Codefolgengenerators (31), wobei das Niederfrequenzsignal als duobinäres Signal codiert wird, und Filtern des Signals, um dessen Bandbreite zu begrenzen, so dass ein duobinäres Signal mit niedriger Bitrate und niedriger Bandbreite erzeugt wird;
- Überlagern des besagten duobinären Signals mit niedriger Bitrate und niedriger Bandbreite mit dem Antriebssignal des Mach-Zehnder-Modulators;
- Erkennen einer Arbeitspunktverschiebung des Mach-Zehnder-Modulators durch Vergleichen des von dem Codefolgengenerator (31) erzeugten pseudozufälligen Niederfrequenzsignals mit einer von einer Niederfrequenzsignal-Erkennungseinheit (37) erkannten Ausgabe des Mach-Zehnder-Modulators (35); und
- Regeln des Arbeitspunktes des Mach-Zehnder-Modulators als eine Funktion der erkannten Arbeitspunktverschiebung des Mach-Zehnder-Modulators.

## Revendications

1. Appareil de modulation optique comprenant un modulateur optique (35) présentant une caractéristique de sortie optique dépendante de la tension dans lequel la sortie optique (11) varie périodiquement par rapport à une valeur de tension d'un signal de commande électrique, ledit appareil comprenant : un générateur de séquence de code (31) adapté pour émettre en sortie un signal basse fréquence pseudo aléatoire ; suivi d'une unité de précodage duobinaire (32) suivie d'un filtre (33) adapté pour fournir un signal duobinaire à faible débit binaire et faible bande passante, une unité de superposition (41) adaptée pour superposer le signal duobinaire à faible débit binaire et faible bande passante sur le signal de commande ; une unité de détection de signal basse fréquence (37) et un contrôleur (39) adaptés pour détecter la dérive du point de fonctionnement du modulateur optique ; et une unité de contrôle de biais (34) adaptée pour contrôler le point de fonctionnement du modulateur optique (35) en produisant une composante de biais du signal de commande électrique en fonction de la dérive détectée du point de fonctionnement.

2. Appareil de modulation optique selon la revendication 1, dans lequel le contrôleur est adapté pour mesurer un taux d'erreur binaire en comparant le signal basse fréquence pseudo aléatoire émis par le générateur de séquence de code (31) avec le signal superposé transportant les données détecté par l'unité de détection de signal basse fréquence (37).

3. Appareil de modulation optique selon la revendication 1, dans lequel le signal basse fréquence pseudo aléatoire est un signal de supervision entré dans le générateur de séquence de code (31).

4. Appareil de modulation optique selon la revendication 1, dans lequel le signal basse fréquence pseudo aléatoire est généré par le générateur de séquence de code.

5. Appareil de modulation optique selon la revendication 1, dans lequel le filtre (33) est adapté pour couper environ un quart du débit binaire appliqué.

6. Procédé d'exploitation d'un appareil de modulation optique par la commande d'un modulateur de Mach-Zehnder (35) au moyen de signaux de données et d'un signal de stabilisation de point de fonctionnement, à l'aide d'une unité de commande de biais (34), comprenant les étapes suivantes :
génération d'un signal basse fréquence pseudo aléatoire au moyen d'un générateur de séquence de code (31), codage du signal basse fréquence comme signal duobinaire et filtrage du signal pour limiter sa bande passante afin de générer un signal duobinaire à faible débit binaire et faible bande passante ;
superposition dudit signal duobinaire à faible débit binaire et faible bande passante avec le signal de commande du modulateur de Mach-Zehnder ;
détection d'une dérive du point de fonctionnement du modulateur de Mach-Zehnder par comparaison du signal basse fréquence pseudo aléatoire généré par le générateur de séquence de code (31) avec une sortie du modulateur de Mach-Zehnder (35) détectée par une unité de détection de signal basse fréquence (37) ; et
contrôle du point de fonctionnement du modulateur de Mach-Zehnder en fonction de la dérive détectée du point de fonctionnement du modulateur de Mach-Zehnder.
